# EUROPÄISCHE PATENTSCHRIFT

(11) **EP 0 704 673 B1**
(45) Veröffentlichungstag und Bekanntmachung des Hinweises auf die Patenterteilung: **19.05.1999**
(21) Anmeldenummer: 95110961.0
(22) Anmeldetag: 13.07.1995
(51) Int. Cl.: G01C 9/28, G01C 25/00

(54) **Herstellungsverfahren für eine Wasserwaage mit darin justierter Libelle**
Manufacturing method for spirit level with adjustable vial
Procédé de fabrication d'un niveau à bulle avec fiole réglable

(30) Priorität: 01.08.1994 DE 4427068
(43) Veröffentlichungstag der Anmeldung: 03.04.1996
(73) Patentinhaber: BAYERISCHE MASS-INDUSTRIE ARNO KELLER GMBH, 91217 Hersbruck (DE)
(72) Erfinder: Keller, Hans, D-91217 Hersbruck (DE); Ott, Georg, D-91224 Pommelsbrunn (DE)
(74) Vertreter: Götz, Georg, Dipl.-Ing.

(56) Entgegenhaltungen:
- DE-A- 3 432 911
- DE-A- 3 606 774
- DE-A- 3 614 152
- US-A- 4 769 310
- US-A- 4 861 620

## Beschreibung

Die Erfindung betrifft ein Verfahren zur Herstellung einer Wasserwaage mit mindestens einer darin eingelassener und justierter Libelle, wobei der Grundkörper der Wasserwaage vor Aufnahme der Libelle entsprechend einem bestimmten Winkel, insbesondere der Horizontalen oder der Vertikalen, ausgerichtet und die Libelle in eine Aussparung des Grundkörpers mittelbar, zum Beispiel über einen Libellenhalter, oder unmittelbar eingesetzt werden. Vorzugsweise ist die Wasserwaage aus Aluminium-Hohlprofil gebildet.

Zur Herstellung von Wasserwaagen ist es bekannt, in die Libellen-Aussparung des Wasserwaagen-Grundkörpers mittelbar oder unmittelbar Libellen einzusetzen, die bereits mit ihrer Gasblase zugeordneten Markierungsringen versehen sind. Nach dem Einsetzen muß die Libelle bezüglich einer Referenz für eine bestimmte Winkelausrichtung, insbesondere der Horizontalen oder Vertikalen, eingestellt bzw. justiert werden. Dies erfolgt anhand von Normalien, an das der Wasserwaagenkörper starr befestigt ist, so lange, bis sich die Gasblase in der Libelle zwischen zwei Markierungsringen befindet oder sich mit einer sonstigen Markierung deckt und in dieser Position fixiert ist. Es sind auch Automatisierungen dieses Vorgangs, beispielsweise im Rahmen eines Regelkreises insbesondere mit Prozeßrechner als Regler und mit Sensoren und Stellgliedern bekannt. Das Fixieren der vorher justierten Libelle erfolgt in der Regel durch Verschrauben, Kleben oder Ultraschallverschweißen.

Insbesondere ist eine Montage-Methode für die Libelle in einem Wasserwaagen-Grundkörper bekannt (DE-OS 34 32 911), bei der in der Aussparung die Libelle dadurch justiert wird, daß die Libelle auf einem Wulst so gekippt wird, bis sich die erwünschte Einstellung der Libelle ergibt. Dann wird Klebstoff mit einer Nadel in Zwischenräume zwischen der Aussparungswandung und der Libellen-Außenwandung eingebracht. Alternativ wird vorgeschlagen, die Fixierung mittels Ultraschall herbeizuführen, indem nach dadurch die Libelle nach ihrem Justierkippen an den Wasserwaagen-Grundkörper angeschweißt wird.

Diese bekannten Methoden bringen es allerdings mit sich, daß es während des Fixierens der Libelle in der Aussparung nahezu unvermeidlich zu einer Verfälschung der vorher vorgenommenen Libelle-Justierung kommt: Trocknet der Fixier-Klebstoff, verändert er zwangsläufig sein Volumen, was Verschiebungen der Libelle gegenüber der vorherigen Justierung ergibt. Beim Ultraschall-Verschweißen der Libelle wird an den Schweißpunkten die Energie hochkonzentriert in Wirkung gebracht, was sich ebenfalls leicht in Verschiebungen und Verstellungen der vorher justierten Libelle gegenüber dem Wasserwaagen-Grundkörper bzw. dem damit starr verbundenen Normal auswirken kann.

Es wird das der Erfindung zugrunde liegende Problem aufgeworfen, eine rationelle Herstellungsmethode für Wasserwaagen zu schaffen, bei der die Positionierung oder Anordnung der Libelle mit höherer Genauigkeit durchgeführt werden kann. Insbesondere sollen nachträgliche Verfälschungen der Libellen-Justierung vermindert oder vermieden sein. Zur Lösung wird bei einem Verfahren mit den eingangs genannten Merkmalen erfindungsgemäß vorgeschlagen, daß in der Aussparung eine Libelle ohne ihrer Gasblase zugeordneter Markierung eingesetzt, starr fixiert und danach in Justierung entsprechend dem bestimmten Winkel mit einer oder mehreren Markierungen für die Gasblase versehen wird, wobei wenigstens während der Justierung die Ausrichtung des Wasserwaagen-Grundkörpers gegenüber dem bestimmten Winkel vorgenommen und/oder beibehalten wird. Basierend auf dem Grundgedanken der Erfindung wird die Markierung für die Libellenblase also erst dann an die Innen-/Außenwandung oder in den Wekstoff der Libelle selbst angebracht, wenn diese bereits in der für sie vorgesehenen Aussparung, Ausnehmung bzw. Nische im Wasserwaagen-Grundkörper starr befestigt ist. Dabei ist der Schritt der Gasblasen-Markierung auf der Libelle zeitgleich zusammengefaßt bzw. integriert mit dem Schritt der (Fein-) Justierung der Libelle entsprechend einem gewünschten Winkel, in der Regel der Horizontalen oder Vertikalen.

Eine vorteilhafte Verfahrensvariante ist dadurch charakterisiert, daß eine Libelle vorzugsweise aus Kunststoff verwendet wird, die in ihrem Werkstoff oder Material Pigmente aufweist, und daß die zu markierenden Bereiche der Libelle derart mit vorzugsweise elektromagnetischer Energie beaufschlagt werden, daß bei den in diesen Bereichen befindlichen Pigmenten ein Farbumschlag verursacht wird. Damit wird eine Veränderung der Oberfläche der Libelle vermieden.

Weitere Einzelheiten, Merkmale und Vorteile auf der Basis der Erfindung ergeben sich aus den beigefügten Unteransprüchen sowie aus der nachfolgenden Beschreibung bevorzugter Ausführungsbeispiele der Erfindung:

### Beispiel 1

Zunächst wird ein Wasserwaagen-Grundkörper ohne Libelle auf ein Halterungsnormal gesetzt und starr befestigt, das eine Referenz für die Vertikale oder Horizontale angibt. Dann wird eine Libelle genommen, auf der Markierungsringe für die Gasblase noch nicht angebracht sind. Diese Libelle wird in die im Wasserwaagen-Grundkörper vorgesehene Aussparung entweder mittels Libellenhalter oder auch unmittelbar eingesetzt und ist damit grob vorjustiert und fixiert. Die Vorjustierung auch aufwendiger durchgeführt werden, zum Beispiel mit an sich gebräuchlichen Justiervorrichtungen wie der oben genannte Regelkreis mit Prozeßrechner.

Auch die Fixierung der Libelle und/oder des Libellenhalters im Wasserwaagen-Grundkörper kann mit den oben genannten, an sich bekannten Methoden erfolgen, beispielsweise durch Kleben. Nach dem Trocknen des Klebers zum Fixieren der Libelle steht als prinzipiell letzter Herstellungsschritt nunmehr die Markierung der Libelle für die Gasblase und - damit verbunden - die Feinjustierung der Libelle entsprechend der Winkellage an, die später mit der herzustellenden Wasserwaage überprüft werden soll. Als Markierung sind in der Regel zwei dünne Markierungsringe zweckmäßig, zwischen denen sich die Libellen-Gasblase bei gewünschter Winkellage befinden soll. Die beiden Markierungsringe lassen sich, solange der Wasserwaagen-Grundkörper auf dem Normal gehaltert ist, mit besonderem Vorteil durch Laser-Materialbearbeitung je nach Fokussierung auf die Außenoberfläche der Libellenwandung, im Wandungsmaterial der Libelle oder auf der Innenoberfläche der Libellenwandung aufbringen. Dabei erfolgt die Feinjustierung durch das Einbringen der Markierungsringe, ohne daß dabei die Klebeverbindung der Libelle mit den Grundkörper bzw. ihre räumliche Anordnung in der Aussparung strapaziert, beeinflußt oder verändert werden würde. Der damit erzielte Vorteil besteht darin, daß das Aufbringen der Ringmarkierungen berührungslos, also ohne mechanische Krafteinwirkung auf die bereits fixierte Libelle durchgeführt wird.

### Beispiel 2

Abweichend vom Beispiel 1 kann die Markierung für die Libellen-Gasblase auch mechanisch aufgedruckt oder durch spanabhebende Bearbeitung erzeugt werden. Dies ist jedenfalls dann möglich, wenn die zum Beispiel gemäß Beispiel 1 verwendete Klebermasse ausreichend gehärtet und damit so fest ist, daß sich keine spürbaren Verschiebungen für die in die Aussparung geklebte Libelle ergeben.

Diese spanabhebende Bearbeitung kann zum Beispiel mittels Frästechnik und/oder eines Stichels erfolgen, der eine Vertiefung in der Oberfläche der Libelle zur Bildung eines Markierungsringes erzeugt. Dieser kann dann später gefärbt, zum Beispiel geschwärzt werden. Alternativ läßt sich die Erzeugung auch durch die oben angeschnittene Laser-Materialbearbeitung durchführen.

### Beispiel 3

Um auch Markier-Methoden für die Libelle mit unabdingbarer Krafteinwirkung unbedenklich verwenden zu können, besteht eine weitere Abwandlung gegenüber den obigen Beispielen darin, die Libelle an ihren Wandungen über Schweißstellen oder -bereiche mit dem Grundkörper der Wasserwaage zu verbinden. Dadurch kann die Stabilität und Robustheit der Libellen-Plazierung gegenüber externer mechanischer Krafteinwirkung bei Bedrucken der Libelle erhöht werden.

Schweißen mittels Ultraschall steht als an sich bekannte und hierzu zweckmäßige Methode zur Verfügung.

### Beispiel 4

Wie nach einem oder mehreren der Beispiele 1 - 3, jedoch mit wie folgt abgewandelter Gasblasen-Markierung auf der Libelle: Mittels eines Wärmeerzeugers, beispielsweise eines Lötkolbens oder Laserstrahls, wird die Außenwandung der Libelle, die zweckmäßig aus Kunststoff gebildet ist, geschmolzen. Im noch geschmolzenen Zustand werden dann Farbpigmente auf diesen Oberflächenbereich, der später zum Beispiel Markierungsringe ergeben soll, aufgebracht, zum Beispiel aufgeblasen. Dabei bleiben die Pigmente, beispielsweise Farbpulverkörnchen, in der Schmelze hängen. Erkaltet der geschmolzene Bereich wieder, bildet er zusammen mit den festgehaltenen Pigmenten eine Markierung oder Musterung.

Für diese Markierungs-Methode für die Libelle einer Wasserwaage wird ausdrücklich selbständiger Schutz für sich genommen vorbehalten, insbesondere in Form einer Teilanmeldung.

### Beispiel 5

Wie Beispiel 4, jedoch wird zunächst die gesamte Libellen-Außenfläche mit Pigmenten beispielsweise in Pulverform beschichtet. Dann werden die Bereiche, welche die Markierung bilden sollen, geschmolzen, beispielsweise in Ringform. Nach dem Aufschmelzen und nachfolgenden Erkalten sind die in diesem Bereich befindlichen Pulver/Pigmentkörnchen unmittelbar unter der Außenfläche der Libelle fixiert. Die nicht durch Erstarren fixierten Pulverkörnchen können dann durch einen Luftstrom abgesaugt werden.

### Beispiel 6

Analog Beispiele 4 oder 5, jedoch wird mittels einer Wärmequelle die Markierung nicht auf die Oberfläche der Außenwandung, sondern auf die der an die Flüssigkeit oder Gasblase angrenzenden Innenwandung der Libelle angebracht:

Mittels eines Fokussier-, insbesondere Linsensystems wird auf also optischem Weg Energie auf die Grenzfläche zwischen der Innenwandung der Libelle und der Flüssigkeit in der Libelle in Wirkung gebracht. Dadurch wird eine Veränderung der Struktur der Oberfläche der Innenwandung der Libelle hervorgerufen. Diese Veränderung kann in Verbindung mit der Flüssigkeit in der Libelle dazu ausgenützt werden, die Markierungsringe zu erzeugen.

Hierzu ist es zweckmäßig, pigmentierte Kunststoffe für die Libellenwandung zu verwenden, welche sich unter Einwirkung elektromagnetischer Strahlung bestimmter Frequenz verändern. Alternativ oder zusätzlich kann auch die Libellenflüssigkeit diese Pigmente oder auch sonstige Farbstoffträger enthalten, zumal die Flüssigkeit in herkömmlichen Libellen ohnehin grün ist.

Mit der Anbringung der Markierung an der Oberfläche der Innenwandung der Libelle wird der Vorteil erzielt, daß der an sich bekannte, störende Parallaxe-Fehler bei Wasserwaagen deutlich vermindert wird oder nicht vorhanden ist. Weiterhin wird die Gasblase auch nicht durch Eindrehungen beziehungsweise Vertiefungen für die Markierungsringe beeinflußt.

### Beispiel 7

Wie nach einem oder mehreren der vorangehenden Beispiele, jedoch mit folgender Zusatz-Variante:

Die Aussparung wird zum direkten Einsetzen und Tragen der Libelle ausgebildet, so daß Zwischenelemente wie aus dem eingangs genannten Stand der Technik nicht mehr notwendig sind. Das direkte Tragen erfolgt erfindungsgemäß durch Quer- und/oder Schmalseiten innerhalb der Aussparung, die parallel und/oder in einem vorbestimmten Winkel, vorzugsweise senkrecht, zur Meß- bzw. Auflagesohle der Wasserwaage verlaufen und die Aussparung begrenzen. Die Aussparung kann präzise dadurch erzeugt werden, daß sie mittels Lasertechnik aus dem Grundkörper der Wasserwaage herausgeschnitten wird. Durch eine solche (Laser-) Präzisionsbearbeitung vor dem Einsetzen der Libelle kann die Grob- und auch spätere Fein-Justierung nach Fixierung unterstützt und verbessert werden.

Die Quer- oder Schmalseiten eignen sich dazu, die Libelle bereits im Klemm- oder Paßsitz und/oder spielfrei zu befestigen, was zumindest der oben genannten Grob-Justierung entsprechen kann.

Wegen weiterer Einzelheiten im Zusammenhang mit Beispiel 7 wird zur Vermeidung von Wiederholungen auf die ältere Patentanmeldung DE-A1-44 01 944 (veröffentlich am 27.7.95) verwiesen.

## Patentansprüche

1. Verfahren zur Herstellung einer Wasserwaage mit darin eingelassener und justierter Libelle, wobei der Grundkörper der Wasserwaage vor Aufnahme der Libelle entsprechend einem bestimmten Winkel, insbesondere der Horizontalen oder Vertikalen, ausgerichtet und die Libelle in eine Aussparung des Grundkörpers mittel- oder unmittelbar eingesetzt werden, dadurch gekennzeichnet, daß in der Aussparung eine Libelle ohne ihrer Gasblase zugeordneter Markierung eingesetzt, starr fixiert und danach in einer Justierung entsprechend dem bestimmten Winkel mit einer oder mehreren Markierungen für die Gasblase versehen wird, wobei wenigstens während der Justierung die Ausrichtung des Grundkörpers gegenüber dem bestimmten Winkel vorgenommen und/oder beibehalten wird.

2. Verfahren nach Anspruch 1, dadurch gekennzeichnet, daß zur Justierung zwei Markierungen an der Libelle so angebracht werden, daß sich deren Gasblase zwischen den Markierungen befindet.

3. Verfahren nach Anspruch 1 oder 2, dadurch gekennzeichnet, daß die Libelle nach ihrem Einsetzen und vor ihrem Fixieren derart vorjustiert wird, daß ihre Lage zumindest nach Augenmaß dem bestimmten Winkel entspricht.

4. Verfahren nach einem der vorangehenden Ansprüche, dadurch gekennzeichnet, daß zur Anlage der Libelle Quer- und/oder Schmalseiten innerhalb der Aufnahme-Aussparung gebildet werden, die parallel und/oder in einem vorbestimmten Winkel, vorzugsweise senkrecht, zur Meßbeziehungsweise Auflagesohle der Wasserwaage verlaufen und die Aussparung begrenzen.

5. Verfahren nach Anspruch 4, dadurch gekennzeichnet, daß die Aussparung mittels Lasertechnik herausgeschnitten wird.

6. Verfahren nach Anspruch 4 oder 5, gekennzeichnet durch die Bildung gegenüberliegender Quer- oder Schmalseiten , zwischen welchen eine Libelle (5) im Klemm- und/oder Paßsitz und/oder spielfrei befestigbar ist.

7. Verfahren nach einem der vorangehenden Ansprüche, dadurch gekennzeichnet, daß in der Aussparung die Libelle mittels Schweißens, insbesondere per Ultraschall, befestigt wird.

8. Verfahren nach einem der vorangehenden Ansprüche, dadurch gekennzeichnet, daß in der Aussparung ein Libellenhalter eingebracht wird, in welcher die Libelle mittels Schweißens, insbesondere per Ultraschall, befestigt wird.

9. Verfahren nach einem der vorangehenden Ansprüche, dadurch gekennzeichnet, daß die Libelle mit Klebstoff in der Aussparung fixiert wird, und die nachfolgende Justierung erst nach Trocknen und/oder Härten des Klebstoffes erfolgt.

10. Verfahren nach einem der vorangehenden Ansprüche, dadurch gekennzeichnet, daß wenigstens eine Markierung auf die Oberfläche der Außenwandung der Libelle aufgebracht wird.

11. Verfahren nach Anspruch 10, dadurch gekennzeichnet, daß die Markierung mechanisch aufgedruckt, durch spanabhebende Bearbeitung erzeugt oder berührungslos mittels Lasertechnik und/oder Wärmeeinwirkung auf die Oberfläche aufgebracht wird.

12. Verfahren nach Anspruch 11, wobei eine Libelle mit schmelzbarer Oberfläche verwendet wird, dadurch gekennzeichnet, daß zu markierende Oberflächenbereiche der Libelle mittels der Wärmeeinwirkung geschmolzen, mit Pigmenten in Verbindung gebracht und dann wieder abgekühlt werden.

13. Verfahren nach Anspruch 12, dadurch gekennzeichnet, daß die Pigmente, die in der erstarrten Schmelze nicht fixiert sind, von der Libelle entfernt, insbesondere abgesaugt werden.

14. Verfahren nach einem der vorangehenden Ansprüche, dadurch gekennzeichnet, daß wenigstens eine Markierung an die Oberfläche der an die Flüssigkeit oder Gasblase angrenzenden Innenwandung der Libelle angebracht ist.

15. Verfahren nach Anspruch 14, dadurch gekennzeichnet, daß die zu markierenden Oberflächenbereiche der Innenwandung optisch mittels eines Fokussier-, insbesondere Linsensystems, mit Energie beaufschlagt werden.

16. Verfahren nach Anspruch 15, dadurch gekennzeichnet, daß wenigstens die zu markierenden Oberflächenbereiche der Libellen-Innenwandung und/oder die Libellenflüssigkeit mit einer Pigmentierung versehen sind, die auf die Energiebeaufschlagung anspricht.

17. Verfahren nach einem der vorangehenden Ansprüche, dadurch gekennzeichnet, daß eine Libelle vorzugsweise aus Kunststoff verwendet wird, die in ihrem Werkstoff oder Material Pigmente aufweist, und daß die zu markierenden Bereiche der Libelle derart mit vorzugsweise elektromagnetischer Energie beaufschlagt werden, daß bei den in diesen Bereichen befindlichen Pigmenten ein Farbumschlag verursacht wird.

## Claims

1. Method of manufacturing a spirit level with a vial let into the same and adjustable therein, wherein the base body of the spirit level before receiving the vial at a certain angle, in particular of the horizontal or vertical is aligned and the vial is inserted in a recess in the base body indirectly or directly, characterised in that in the recess a vial is inserted without its marking associated with its gas bubble, is fixed rigidly and thereafter is provided according to the certain angle with adjustment with one or more markings for the gas bubble, in which case at least during adjustment alignment of the base body with respect to the certain angle is carried out and/or retained.

2. Method according to claim 1, characterised in that for adjustment two markings are applied to the vial in such a manner that its gas bubble is located between the markings.

3. Method according to claim 1 or 2, characterised in that the vial is preadjusted after its insertion and before its fixing, in such a manner that its position corresponds at least by visual measurement to the certain angle.

4. Method according to one of the preceding claims, wherein the recess for insertion and direct carrying of the vial is formed in particular according to the prior patent application P 44 01 944.0-52, characterised in that for bearing of the vial transverse and/or narrow sides are formed inside the receiving recess and extend parallel and/or at a predetermined angle, preferably perpendicular to the contact sole of the spirit level relative to measurement and define the recess.

5. Method according to claim 4, characterised in that the recess is cut out by laser.

6. Method according to claim 4 and 5, characterised by the formation of opposite transverse or narrow sides between which a vial (5) is fixable in a clamping and/or tight fit and/or with play.

7. Method according to one of the preceding claims, characterised in that the vial is fixed in the recess by means of welding, in particular by ultrasound.

8. Method according to one of the preceding claims, characterised in that a vial holder is fitted in the recess, in which holder the vial is fixed by means of welding, in particular by ultrasound.

9. Method according to one of the preceding claims, characterised in that the vial is fixed with adhesive in the recess, and the subsequent adjustment only takes place after drying and/or hardening of the adhesive.

10. Method according to one of the preceding claims, characterised in that at least one marking is applied to the surface of the outer wall of the vial.

11. Method according to claim 10, characterised in that the marking is mechanically imprinted, is generated by machining or contactlessly by laser technology and/or heat action on the surface.

12. Method according to claim 11, wherein a vial is used with a meltable surface, characterised in that surface regions of the vial to be marked are melted by the effect of heat, are brought into contact with pigments and are then cooled again.

13. Method according to claim 12, characterised in that the pigments which are not fixed in the set melt are removed from the vial, in particular are sucked up.

14. Method according to one of the preceding claims, characterised in that at least one marking is applied to the surface of the inner wall of the vial adjoining the liquid or gas bubble.

15. Method according to claim 14, characterised in that the surface regions of the inner wall to be marked are visually marked with energy by means of a focusing, in particular lens system.

16. Method according to claim 15, characterised in that at least the surface regions ofthe vial inner wall and/or the vial liquid to be marked are provided with a pigmentation, which responds to the action of energy.

17. Method according to one of the preceding claims, characterised in that a vial preferably made of plastics material is used, which has in its material pigments, and in that the regions of the vial to be marked are so acted on by preferably electromagnetic energy that at the pigments located in these regions a colour change takes place.

## Revendications

1. Procédé de fabrication d'un niveau à bulle dans lequel une fiole est encastrée et ajustée, le corps de base du niveau à bulle, avant de recevoir la fiole, étant orienté conformément à un angle déterminé, notamment selon l'horizontale ou la verticale, et la fiole étant insérée dans un évidement du corps de base, directement ou indirectement, caractérisé en ce que dans l'évidement on insère une fiole sans marque associée à sa bulle de gaz, on la fixe de manière rigide et ensuite, lors d'une phase d'ajustage, on la dote d'une ou de plusieurs marques pour la bulle de gaz conformément à l'angle déterminé, l'orientation du corps de base par rapport à l'angle déterminé étant réalisée et/ou maintenue au moins durant la phase d'ajustage.

2. Procédé selon la revendication 1, caractérisé en ce que pour l'ajustage, on rapporte deux marques sur la fiole de façon telle que sa bulle de gaz se situe entre les marques.

3. Procédé selon la revendication 1 ou 2, caractérisé en ce que la fiole est préajustée après son insertion et avant sa fixation, de façon telle que sa position corresponde, au moins à l'oeil nu, à l'angle déterminé.

4. Procédé selon l'une des revendications précédentes, l'évidement destiné à l'insertion et au support direct de la fiole étant formé notamment conformément à la demande de brevet antérieure P 44 01 944.0-52, caractérisé en ce que pour le positionnement de la fiole, à l'intérieur de l'évidement de réception, on forme des faces transversales et/ou étroites, qui s'étendent parallèlement et/ou selon un angle prédéterminé, de préférence perpendiculairement, par rapport à la semelle de mesure ou d'appui du niveau à bulle, et qui délimitent l'évidement.

5. Procédé selon la revendication 4, caractérisé en ce que l'évidement est découpé au moyen d'une technique au laser.

6. Procédé selon la revendication 4 ou 5, caractérisé par la formation de faces opposées transversales ou étroites, entre lesquelles une fiole (5) peut être fixée selon un ajustement serré et/ou un ajustement bloqué et/ou sans jeu.

7. Procédé selon l'une des revendications précédentes, caractérisé en ce que la fiole est fixée dans l'évidement par soudage, notamment par soudage aux ultrasons.

8. Procédé selon l'une des revendications précédentes, caractérisé en ce que dans l'évidement est introduit un support de fiole, dans lequel la fiole est fixée par soudage, notamment par soudage aux ultrasons.

9. Procédé selon l'une des revendications précédentes, caractérisé en ce que la fiole est fixée par de la colle dans l'évidement, et l'ajustage ultérieur ne s'effectue qu'après séchage et/ou durcissement de la colle.

10. Procédé selon l'une des revendications précédentes, caractérisé en ce qu'au moins une marque est rapportée sur la surface de la paroi extérieure de la fiole.

11. Procédé selon la revendication 10, caractérisé en ce que la marque est imprimée mécaniquement, est réalisée par un usinage par enlèvement de copeaux ou est rapportée sans contact sur la surface par une technique au laser et/ou par l'action de chaleur.

12. Procédé selon la revendication 11, mettant en oeuvre une fiole à surface fusible, caractérisé en ce que des zones de surface à marquer de la fiole subissent une fusion par l'action de chaleur, sont mises en contact avec des pigments et sont ensuite à nouveau refroidies.

13. Procédé selon la revendication 12, caractérisé en ce que les pigments, qui ne sont pas fixés dans la partie fondue solidifiée, sont éliminés de la fiole, notamment par aspiration.

14. Procédé selon l'une des revendications précédentes, caractérisé en ce qu'au moins une marque est placée sur la surface de la paroi intérieure de la fiole, adjacente au liquide ou à la bulle de gaz.

15. Procédé selon la revendication 14, caractérisé en ce que les zones de surface de la paroi intérieure, qui doivent être marquées, sont excitées optiquement par une énergie au moyen d'un système de focalisation, notamment un système de lentilles.

16. Procédé selon la revendication 15, caractérisé en ce qu'au moins les zones de surface de la paroi intérieure de la fiole, qui doivent être marquées, et/ou le liquide de la fiole sont dotés d'une pigmentation qui réagit à l'excitation par une énergie.

17. Procédé selon l'une des revendications précédentes, caractérisé en ce que l'on utilise une fiole, de préférence en matière plastique, qui dans son matériau ou sa matière renferme des pigments, et en ce que les zones à marquer de la fiole sont excitée par une énergie, de préférence électromagnétique, de façon à ce qu'il se produise un changement de couleur des pigments se trouvant dans ces zones.
